# EUROPEAN PATENT SPECIFICATION

(11) **EP 0 661 317 B1**
(45) Date of publication and mention of the grant of the patent: **11.11.1998**
(21) Application number: 94119907.7
(22) Date of filing: 16.12.1994
(51) Int. Cl.: C08G 18/40, C09D 175/06

(54) **Coating containing urethane and acrylic resin mixture for improved resistance to chipping**
Urethan- und Acrylharzgemisch enthaltende Beschichtung zur Verbesserung des Steinschlagschutzes
Revêtement à partir d'un mélange de résine d'uréthane et d'acrylique pour une résistance améliorée aux pierres

(30) Priority: 23.12.1993 US 173296
(43) Date of publication of application: 05.07.1995
(73) Proprietor: BASF CORPORATION, Southfield, Michigan 48086-5009 (US)
(72) Inventor: Harris, Paul J., West Bloomfield, Michigan 48324 (US); Foukes, Richard J., Utica, Michigan 48317 (US)
(74) Representative: Münch, Volker, Dr.

(56) References cited:
- EP-A- 0 542 105
- EP-A- 0 555 705

## Description

### Field of the Invention

The present invention is directed to coating compositions. More specifically, the present invention is directed to coating compositions containing hydroxy functional polyurethane resins and acrylic resin.

### Background of the Invention

It is well known in the automotive industry to apply primer surfacer coatings and anti-chip coatings to areas of a vehicle which are prone to stone chipping. Coatings for this purpose have conventionally been unsaturated polyester based coatings. It is desirable to utilize acrylic based primer surfacer and anti-chip coatings because they provide a primer layer that is resistant to degradation by ultraviolet radiation. UV radiation causes intercoat degradation of the primer layer which causes a loss of adhesion between the primer coating and other coating layers and results in delamination. However, the use of such coatings is problematic, as acrylic based coatings are more brittle and less chip resistant than polyester systems. It has been discovered that the addition of a urethane diol resin to an acrylic resin provides a coating with increased flexibility and greatly improved resistance to stone chipping.

### Summary of the Invention

The present invention is a coating composition including a hydroxy functional polyurethane resin and an acrylic resin. The hydroxy functional polyurethane resin is the reaction product of a polyol and an unblocked aliphatic isocyanate. The polyurethane resin is used in acrylic based coating compositions to improve flexibility and resistance of the coating to stone chipping.

### Detailed Description of the Invention

The present invention is a coating composition including an acrylic resin and a polyurethane resin which is the reaction product of a hydroxy functional polyol and an unblocked aliphatic diisocyanate, for improved flexibility of the coating and for improved resistance of the coating to stone chipping. The polyurethane resin of the present invention is useful in powder coatings, as well as in solvent-borne and water-borne coatings.

For purposes of the present invention, the polyurethane is the reaction product of hydroxy functional polyols including alkyl polyols, polyester polyols, polyether polyols and acrylic polyols. Polyester polyols can be prepared by ring-opening polymerization of a cyclic ester, such as caprolactone or butyrolactone. Particularly preferred are caprolactone based polyols having a molecular weight of between 400 and 3,000 and a hydroxyl number of 250 to 30 mg KOH/g.

The polyol is reacted with an unblocked aliphatic diisocyanate having the formula NCO-R-NCO, where R is an aliphatic linkage having a carbon chain length ranging from C1 to C20. Particularly useful diisocyanates for the present invention include methylene dicyclohexyl diisocyante, hexamethylene diisocyanate 2-methyl-1,5-pentane diisocyanate, 2,2,4-trimethyl-1,6-hexane diisocyanate, 1, 12-dodecane diisocyanate and isophorone diisocyanate (IPDI). Aliphatic isocyanates are preferred for purposes of the present invention, as the aromatic isocyanates are less resistant to degradation by ultraviolet radiation.

When the urethane resin is to be used in a powder coating composition, the preferred diisocyanate includes cyclohexane derivatives, as the cyclohexane ring is capable of forming conformational isomers. The ability of the cyclohexane ring to change conformation is thought to provide additional flexibility necessary for successful incorporation of the urethane resin in a powder coating. The preferred isocyanate for powder coatings is methylene dicyclohexyl diisocyante, sold under the trademark
Desmodur® W from Miles Inc., Mobay Road, Pittsburgh, Pennsylvania 15205.

The polyurethanes are produced by reacting the diol component and the isocyanate component so as to result in the desired molecular weight properties.

The components should be reacted in an amount such that the ratio of the number of isocyanate equivalents of the isocyanate component to the number of equivalents of hydroxyl groups in the diol component is in the range of from 1.0 : 2.0 to 9 :10, preferably from 3:4 to 5:6. Preferably, the resultant polyurethane resin has a molecular weight ranging from 300 to 5,000.

The components are reacted at a temperature of between 15°C to 125°C, optionally in the presence of a polyurethane catalyst. The polyurethane catalyst used depends upon the particular components and reaction conditions. For purposes of the present invention the preferred catalyst is di-butyl tin di-laurate.

Acrylic polymers suitable for the present invention are well known in the art, and can be prepared from monomers such as methyl acrylate, acrylic acid, methacrylic acid, methyl methacrylate, butyl methacrylate, cyclohexyl methacrylate, and the like. The functional group that is reactive with curing agent e.g. hydroxyl, can be incorporated into the ester portion of the acrylic monomer. For example, hydroxy-functional acrylic monomers that can be used to form such polymers include hydroxyethyl acrylate, hydroxybutyl acrylate, hydroxybutyl methacrylate, hydroxypropyl acrylate and the like. Amino functional acrylic monomers would include t-butylaminoethyl methacrylate and t-butylaminoethylacrylate. Other acrylic monomers having reactive functional groups such as epoxy functional groups would include glycidyl methacrylate.

The polyurethane resin is utilized in the resin mixture in an amount between 5 and 45 % by weight, and the acrylic resin is utilized in an amount between 55 and 95 % by weight based on total weight of the resin mixture. Preferably, the polyurethane resin is utilized in an amount between 20 and 40 % by weight, and the acrylic resin is utilized in an amount between 60 and 80 % by weight based on total weight of the resin mixture.

When the polyurethane flex resin is used in an acrylic powder coating composition, the preferred acrylic resins are hydroxy functional and have a hydroxyl value of 20 to 120 and a number average molecular weight of 3,000 to 35,000. The polyurethane resin is added to an acrylic resin by melting the polyurethane resin and then adding the acrylic resin to it in small portions, allowing the acrylic resin to melt into the polyurethane resin. The resin mixture can then be used in a powder coating composition.

Powder coating compositions may be formulated from the polyurethane and acrylic resin mixture and suitable crosslinking agents. Suitable crosslinking agents include any one of a number of well known hydroxy group reactive crosslinking agents, such as polyisocyanates, and/or aminoplast resins. Particularly preferred curing agents are blocked aliphatic isocyanate crosslinkers such as e-caprolactam blocked isophorone diisocyanate.

Solvent-borne coating compositions are formulated by adding the polyurethane flex resin to an acrylic solvent-borne coating composition. Suitable solvents are included to disperse the polyurethane resin in the acrylic resin. Suitable crosslinkers are also included in the coating composition. Examples of useful crosslinkers include blocked melamine crosslinking agents. Particularly useful are monomeric and polymeric melamine crosslinkers with high or low imino content.

The polyurethane flex resin is also useful with water-borne acrylic based coating compositions containing an acrylic copolymer. The urethane resin is reacted with a compound having a functional group to provide anionic, cationic or non-ionic stabilization. One example of this, is the anionic stabilization provided by reaction of the urethane with an acid functional diol to form a hydroxy terminated, acid stabilized polyester. A useful acid for this purpose is dimethyolpropionic acid. The resin can then be at least partially neutralized with an amine and added to the acrylic based water-borne coating composition. Any suitable crosslinker may be utilized. Such crosslinkers include aminoplast and polyisocyanate crosslinkers.

The invention is further illustrated by the following non-limiting examples.

### Examples

### Example 1

### Synthesis of Polyurethane Powder Resin

A 5 liter steel reaction vessel was charged with 870 g 3.26 eq) caprolactone based polyol and 1.0 g dibutyl tin dilaurate. This mixture was slowly heated to 50°C in order to melt out the polyol and then 305 g (2.175 eq) dihexamethylene diisocyanate was added slowly, over a two hour period, such that the exothermic reaction was held below 100°C. At this stage, the reaction mixture was held at 100°C for 30 minutes and a further charge of 40 g (0.28 eq) dihexamethylene diisocyanate was added. At this point the reaction temperature rose to 120°C and was held there for 30 minutes. At this stage a further charge of 20g (0.14 eq) dihexamethylene diisocyanate was added and the temperature maintained at 120°C for an hour. At this time an NCO titration revealed no free isocyanate in the reaction mixture, and the product was then isolated as a waxy semi-solid.

### Example 2

### Preparation of the Polyurethane-Acrylic Resin Blend for Powder Coating Composition

750 g of the polyurethane resin from Example 1 was charged to the reactor and heated to 130°C to melt it. When the polyurethane was melted, 2150 g of an acrylic resin, sold under the trademark Joncryl® 587, (from S. C. Johnson and Son, Racine, Wisconsin 53403), was added to the reactor in small portions and allowed to melt into the polyurethane resin. The complete charge of acrylic resin was added over 4 hours. At the end of this time the resin was isolated for use in coating compositions.

### Example 3

Powder Coating Compositions Prepared With and Without the Resin Blend from Example 2

| Ingredients | Control No Resin Blend | Composition with Resin Blend |
|---|---|---|
| Resin Blend (from Ex. 2) | --- | 38.58 g |
| Acrylic Resin¹ | 36.12 g | --- |
| Blocked IPDI² | 23.83 g | 21.43 g |
| Acid Acrylic Resin³ | 1.0 g | 1.0 g |
| Flow Additive⁴ | 1.00 g | 1.00 g |
| Benzoin⁵ | 0.40 g | 0.40 g |
| Lanco Wax⁶ | 0.40 g | 0.40 g |
| White Pigment⁷ | 18.52 g | 18.52 g |
| Black Pigment⁸ | 0.10 g | 0.10 g |
| Filler⁹ | 18.52 g | 18.52 g |
| Fumed Silica¹⁰ | 0.05 g | 0.05 g |
| | | |
| Total | 100.0 | 100.0 |

| | | |
|---|---|---|
| 1 Joncryl® 587, from S. C. Johnson and Son, Racine Wisconsin 53403. | | |
| 2 B1065, from HÜLS America, Piscataway, New Jersey 08855. | | |
| 3 SCX 819, from S. C. Johnson and Son, Racine Wisconsin 53403. | | |
| 4 EX 505, from Troy Corp., East Hanover, New Jersey 07936. | | |
| 5 Uraflow B, from GCA Chemical Corp., Brandenton, Florida 34205. | | |
| 6 PP 1362D, from Cray Valley Products, Stuyvesant, New York 12173. | | |
| 7 2310, from Kronos Inc., Houston, Texas 77205. | | |
| 8 FW200, Degussa Corp., Ridgefield Park, New Jersey 07660. | | |
| 9 Baramite XF, Cyprus Foote Mineral Co., Malvern, Pennsylvania 19355 | | |
| 10 Aerosil 812, Degussa Corp., Ridgefield Park, New Jersey 07660. | | |

The above ingredients were added to a premixer in the order given and mixed for 60 seconds. The mixture was extruded in a Werner and Pfleiderer 2SK 30 extruder at 250 RPM and at 130°C.

Coatings were applied with an ONODA spray gun, Model No. GX108. Panels were sprayed with the urethane acrylic resin mixture to a thickness of between 2.0 and 10 mils over electrocoated cold rolled steel (CRS). The panels were baked for 30 minutes at 350°F. Lower cure materials can be made by adjustment to the powder formulation. Where desired applications of basecoat and clearcoat are made and baked for 30 minutes at 265°C.

## Claims

1. A powder coating composition comprising
a) a resin mixture of
i) a polyurethane resin having a functional group selected from hydroxy, amino and epoxy functionalities, wherein the polyurethane resin has a molecular weight ranging from 300 to 5,000 and
ii) an acrylic resin having a functional group selected from hydroxy, amino and epoxy functionalities and having a measured T_{g} of between 30° and 60°C and
b) a crosslinking agent, reactable with the functional groups on the polyurethane and acrylic resins.

2. The coating composition of claim 1, wherein the polyurethane is obtained by reaction of a hydroxy functional polyol selected from alkyl polyols, polyester polyols, polyether polyols and acrylic polyols and isocyanate selected from methylene dicyclohexyl diisocyante, hexamethylene diisocyanate, 2-methyl-1,5-pentane diisocyanate, 2,2,4-trimethyl-1,6-hexane diisocyante, 1,12-dodecane diisocyanate and isophorone diisocyanate.

3. The coating composition of claim 1, wherein the acrylic resin is hydroxy functional and has a molecular weight ranging from 3,000 to 35,000 and has a hydroxyl value of 20 to 120.

4. The coating composition of claim 1, wherein the polyurethane resin is present in an amount between 5 and 45% by weight, and the acrylic resin is present in an amount between 55 and 95 % by weight based on total weight of the resin mixture.

5. The coating composition of claim 1, wherein the polyurethane resin is present in an amount between 25 and 45% by weight, and the acrylic resin is present in an amount between 55 and 75 % by weight based on total weight of the resin mixture.

6. The coating composition of claim 1, wherein the acrylic resin is hydroxy functional and the urethane resin is hydroxy functional.

7. The coating composition of claim 6, wherein the crosslinking agent is a polyisocyanate resin or aminoplast resin.

8. The coating composition of claim 1, wherein the polyurethane resin is obtained by reaction of a hydroxy functional polyol and an unblocked aliphatic polyisocyanate.

9. The coating composition of claim 8, wherein the polyurethane has a ratio of isocyanate equivalents of the isocyanate component to equivalents of hydroxyl groups in the polyol component ranging from 1.0 : 2.0 to 9 :10.

10. The coating composition of claim 1, wherein the coating composition is used as a primer coating.

11. The coating composition of claim 8, wherein the acrylic resin is a hydroxy functional acrylic resin.

12. The coating composition of claim 8, wherein the urethane resin is the reaction product of dicyclohexyl diisocyanate and a caprolactone polyol.

13. The coating composition of claim 8, wherein the crosslinking agent is selected from polyisocyanate and aminoplast resins.

14. A powder coating composition comprising
a) a mixture of
i) a hydroxy functional polyurethane resin obtained by reaction of a hydroxy functional polyol and an unblocked aliphatic isocyanate, wherein the polyurethane resin has a molecular weight ranging from 300 to 4,000 and
ii) a hydroxy functional acrylic having a Tg of between 30° and 60 °C and
b) a crosslinking agent reactable with the hydroxy functional polyurethane and hydroxy functional acrylic resins.

15. The powder coating composition of claim 14, wherein the polyurethane is obtained by reaction of a hydroxy functional polyol selected from alkyl polyols, polyester polyols, polyether polyols and acrylic polyols and isocyanate selected from methylene dicyclohexyl diisocyante, hexamethylene diisocyanate, 2,2,4-trimethyl-1,6-hexane diisocyante, 1,12-dodecane diisocyanate and isophorone diisocyanate.

16. The powder coating composition of claim 14, wherein the crosslinking agent crosslinking agent is a polyisocyanate or aminoplast resin.

## Patentansprüche

1. Pulverlackzusammensetzung, enthaltend
a) eine Harzmischung aus
i) einem Polyurethanharz mit einer funktionellen Gruppe, ausgewählt aus Hydroxy-, Amino- und Epoxidfunktionalitäten, und einem Molekulargewicht im Bereich von 300 bis 5.000 und
ii) einem Acrylharz mit einer funktionellen Gruppe, ausgewählt aus Hydroxy-, Amino- und Epoxidfunktionalitäten, und einer gemessenen T_{g} von 30 bis 60°C und
b) einen Vernetzer, der mit den funktionellen Gruppen des Polyurethan- und des Acrylharzes reagieren kann.

2. Lackzusammensetzung nach Anspruch 1, bei der das Polyurethan durch Umsetzung eines hydroxyfunktionellen Polyols, ausgewählt unter Alkylpolyolen, Polyesterpolyolen, Polyetherpolyolen und Acrylpolyolen, mit Isocyanat, ausgewählt unter Methylendicyclohexyldiisocyanat, Hexamethylendiisocyanat, 2-Methyl-1,5-pentandiisocyanat, 2,2,4-Trimethyl-1,6-hexandiisocyanat, 1,12-Dodecandiisocyanat und Isophorondiisocyanat, erhalten wird.

3. Lackzusammensetzung nach Anspruch 1, bei der das Acrylharz hydroxyfunktionell ist und ein Molekulargewicht im Bereich von 3.000 bis 35.000 und eine Hydroxylzahl von 20 bis 120 aufweist.

4. Lackzusammensetzung nach Anspruch 1, in der das Polyurethanharz in einer Menge von 5 bis 45 Gew.-% und das Acrylharz in einer Menge von 55 bis 95 Gew.-%, bezogen auf das Gesamtgewicht der Harzmischung, vorliegt.

5. Lackzusammensetzung nach Anspruch 1, in der das Polyurethanharz in einer Menge von 25 bis 45 Gew.-% und das Acrylharz in einer Menge von 55 bis 75 Gew.-%, bezogen auf das Gesamtgewicht der Harzmischung, vorliegt.

6. Lackzusammensetzung nach Anspruch 1, bei der sowohl das Acrylharz als auch das Urethanharz hydroxyfunktionell ist.

7. Lackzusammensetzung nach Anspruch 6, bei der es sich bei dem Vernetzer um ein Polyisocyanatharz oder Aminoplastharz handelt.

8. Lackzusammensetzung nach Anspruch 1, bei der das Polyurethanharz durch Umsetzung eines hydroxyfunktionellen Polyols mit einem unblockierten aliphatischen Polyisocyanat erhalten wird.

9. Lackzusammensetzung nach Anspruch 8, bei der das Polyurethan ein Verhältnis von Isocyanat-Äquivalenten der Isocyanatkomponente zu Hydroxylgruppen-Äquivalenten in der Polyolkomponente von 1,0:2,0 bis 9:10 aufweist.

10. Lackzusammensetzung nach Anspruch 1, die als Grundierung verwendet wird.

11. Lackzusammensetzung nach Anspruch 8, bei der es sich bei dem Acrylharz um ein hydroxyfunktionelles Acrylharz handelt.

12. Lackzusammensetzung nach Anspruch 8, bei der es sich bei dem Urethanharz um das Umsetzungsprodukt von Dicyclohexyldiisocyanat mit einem Caprolactonpolyol handelt.

13. Lackzusammensetzung nach Anspruch 8, bei der der Vernetzer unter Polyisocyanat- und Aminoplastharzen ausgewählt wird.

14. Pulverlackzusammensetzung, enthaltend
a) eine Mischung aus
i) einem durch Umsetzung eines hydroxyfunktionellen Polyols mit einem unblockierten aliphatischen Isocyanat erhaltenen hydroxyfunktionellen Polyurethanharz mit einem Molekulargewicht im Bereich von 300 bis 4.000 und
ii) einem hydroxyfunktionellen Acrylharz mit einer T_{g} von 30 bis 60°C und
b) einen Vernetzer, der mit dem hydroxyfunktionellen Polyurethan- und Acrylharz reagieren kann.

15. Pulverlackzusammensetzung nach Anspruch 14, bei der das Polyurethan durch Umsetzung eines hydroxyfunktionellen Polyols, ausgewählt unter Alkylpolyolen, Polyesterpolyolen, Polyetherpolyolen und Acrylpolyolen, mit Isocyanat, ausgewählt unter Methylendicyclohexyldiisocyanat, Hexamethylendiisocyanat, 2,2,4-Trimethyl-1,6-hexandiisocyanat, 1,12-Dodecandiisocyanat und Isophorondiisocyanat, erhalten wird.

16. Pulverlackzusammensetzung nach Anspruch 14, bei der es sich bei dem Vernetzer um ein Polyisocyanat- oder Aminoplastharz handelt.

## Revendications

1. Composition de revêtement pulvérulente comprenant
a) un mélange résineux de
i) une résine de polyuréthanne ayant un groupe fonctionnel choisi parmi des fonctionnalités hydroxy, amino et époxy, la résine de polyuréthanne ayant un poids moléculaire de 300 à 5 000 et
ii) une résine acrylique ayant un groupe fonctionnel choisi parmi des fonctionnalités hydroxy, amino et époxy et ayant une Tᵥ mesurée comprise entre 30° et 60C° et
b) un agent de réticulation pouvant réagir avec les groupes fonctionnels des résines de polyuréthanne en acrylique.

2. Composition de revêtement selon la revendication 1, dans laquelle le polyuréthanne est obtenu par réaction d'un polyol à fonction hydroxy choisi parmi des alkylpolyols, des polyester-polyols, des polyéther-polyols et des polyols acryliques, et d'un isocyanate choisi parmi le diisocyanate de méthylènedicyclohexyle, le diisocyanate d'hexaméthylène, le diisocyanate de 2-méthyl-1,5-pentane, le diisocyanate de 2,2-4-triméthyl-1,6-hexane, le diisocyanate de 1,12-dodécane et le diisocyanate d'isophorone.

3. Composition de revêtement selon la revendication 1, dans laquelle la résine acrylique est à fonction hydroxy et possède un poids moléculaire s'échelonnant de 3 000 à 35 000 et un indice d'hydroxyle de 20 à 120.

4. Composition de revêtement selon la revendication 1, dans laquelle la résine de polyuréthanne est présente en une quantité comprise entre 5 et 45% en poids, et la résine acrylique est présente en une quantité comprise entre 55 et 95% en poids, par rapport au poids total du mélange de résines.

5. Composition de revêtement selon la revendication 1, dans laquelle la résine de polyuréthanne est présente en une quantité comprise entre 25 et 45% en poids, et la résine acrylique est présente en une quantité comprise entre 55 et 75% en poids, par rapport au poids total du mélange de résines.

6. Composition de revêtement selon la revendication 1, dans laquelle la résine acrylique est à fonction hydroxy et la résine d'uréthanne est à fonction hydroxy.

7. Composition de revêtement selon la revendication 6, dans laquelle l'agent de réticulation est une résine de polyisocyanate ou une résine aminoplaste.

8. Composition de revêtement selon la revendication 1, dans laquelle la résine de polyuréthanne est obtenue par réaction d'un polyol à fonction hydroxy et d'un polyisocyanate aliphatique non bloqué.

9. Composition de revêtement selon la revendication 8, dans laquelle le polyuréthanne présente un rapport entre les équivalents diisocyanate du composant d'isocyanate et les équivalents de groupes hydroxyle du composant polyol, s'échelonnant de 1,0:2,0 à 9:10.

10. Composition de revêtement selon la revendication 1, la composition de revêtement étant utilisée en tant que revêtement d'apprêt.

11. Composition de revêtement selon la revendication 8, dans laquelle la résine acrylique est une résine acrylique à fonction hydroxy.

12. Composition de revêtement selon la revendication 8, dans laquelle la résine d'uréthanne est le produit de réaction du diisocyanate de dicyclohexyle et d'un caprolactone-polyol.

13. Composition de revêtement selon la revendication 8, dans laquelle l'agent de réticulation est choisi parmi des résines de polyisocyanate et aminoplastes.

14. Composition de revêtement pulvérulente comprenant
a) un mélange de
i) une résine de polyuréthanne à fonction hydroxy obtenue par réaction d'un polyol à fonction hydroxy et d'un isocyanate aliphatique non bloqué, la résine de polyuréthanne ayant un poids moléculaire s'échelonnant de 300 à 4 000 et
ii) un acrylique à fonction hydroxy ayant une Tᵥ comprise entre 30° et 60°C et
b) un agent de réticulation pouvant réagir avec la résine de polyuréthanne à fonction hydroxy et la résine acrylique à fonction hydroxy.

15. Composition de revêtement pulvérulente selon la revendication 14, dans laquelle le polyuréthanne est obtenu par réaction d'un polyol à fonction hydroxy choisi parmi des alkylpolyols, des polyester-polyols, des polyéther-polyols en des polyols acryliques, et d'un isocyanate choisi parmi le diisocyanate de méthylène-dicyclohexyle, le diisocyanate d'hexaméthylène, le diisocyanate de 2,2-4-triméthyl-1,6-hexane, le diisocyanate de 1,12-dodécane en le diisocyanate d'isophorone.

16. Composition de revêtement pulvérulente selon la revendication 14, dans laquelle l'agent de réticulation est une résine de polyisocyanate ou aminoplaste.
